(19) Europäisches Patentamt
European Patent Office
Office européen des brevets

(11) **EP 3 735 748 B1**

(12) **EUROPEAN PATENT SPECIFICATION**

(45) Date of publication and mention
of the grant of the patent:
**08.04.2026 Bulletin 2026/15**

(21) Application number: **18708049.4**

(22) Date of filing: **01.02.2018**

(51) International Patent Classification (IPC):
**H04B 1/40** (2015.01)

(52) Cooperative Patent Classification (CPC):
**H04B 1/40**

(86) International application number:
**PCT/EP2018/052526**

(87) International publication number:
**WO 2019/149362 (08.08.2019 Gazette 2019/32)**

(54) **RADIO FREQUENCY FRONT END FOR WIRELESS COMMUNICATION**

FUNKFREQUENZ-FRONTEND FÜR DRAHTLOSE KOMMUNIKATION

FRONTAL RADIOFRÉQUENCE POUR COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.11.2020 Bulletin 2020/46**

(73) Proprietor: **HUAWEI TECHNOLOGIES CO., LTD.
Shenzhen, Guangdong 518129 (CN)**

(72) Inventors:
• **EZRI, Doron
80992 Munich (DE)**
• **SHILO, Shimon
80992 Munich (DE)**
• **REGEV, Dror
80992 Munich (DE)**

(74) Representative: **Isarpatent
Patent- und Rechtsanwälte Barth
Charles Hassa Peckmann & Partner mbB
Postfach 44 01 51
80750 München (DE)**

(56) References cited:
WO-A1-2006/071005     US-A1- 2009 190 509
US-A1- 2015 222 300

**Description**

FIELD OF THE INVENTION

The present invention relates to a radio frequency front end for wireless communication, especially to a radio frequency front end in which transmitting and receiving is performed using the same antenna.

BACKGROUND

Duplexers for mobile communication devices are known from US 2015/0222300 A1. WO 2006/071005 A1 relates to a wireless communication base station sharing apparatus. From US 2009/0190509 A1, an apparatus for a Transmit/Receive Antenna Switch in a Time Division Duplex wireless communication system is known.

There are different operation modes for a radio frequency front end in which transmitting and receiving is performed using the same antenna. In a half-duplex system (HD), also known as transmit/receive (TR), only one of transmitting and receiving can be performed at a specific time. In a full-duplex system (FD), also known as simultaneous transmit/receive (STR), both transmitting and receiving may be performed simultaneously.

In the half-duplex system, the antenna is either connected to an output port of a transmit path which is configured to supply a transmit signal which is to be transmitted via the antenna, or to an input port of a receive path which is configured to process a receive signal received from the antenna. In the full-duplex system, the antenna is permanently connected both to the output port of the transmit path and the input port of the receive path.

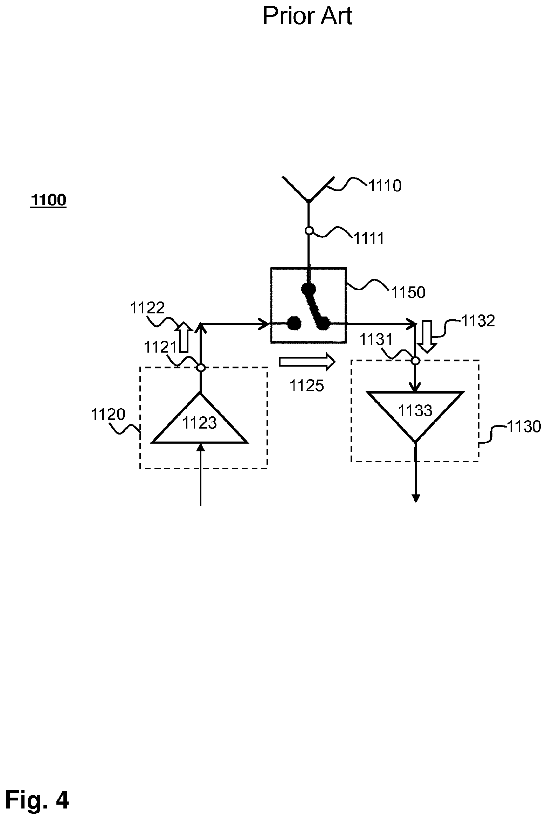

Fig. 4 shows a schematic circuit diagram of a conventional radio frequency front end for half-duplex operation. The radio frequency front end 1100 comprises an antenna port 1111 to which an antenna 1110 is connected. The radio frequency front end 1100 further comprises a transmit path 1120 for supplying a transmit signal 1122 to the antenna port, and a receive path 1130 for receiving a receive signal 1132 from the antenna port 1111. The transmit path 1120 comprises an output amplifier 1123, for example a power amplifier, the output of which is connected to a transmit path output 1121. The receive path 1130 comprises an input amplifier 1133, for example a low-noise amplifier, the input of which is connected to a receive path input 1131.

A transmit/receive switch 1150 is connected to the antenna port 1111, the transmit path output 1121, and the receive path input 1131. The transmit/receive switch is configured to connect the antenna port 1111 either to the transmit path output 1121 or to the receive path input 1131. In a transmit mode, the signal switch 1150 connects the antenna port 1111 to the transmit path output 1121 so that the transmit signal 1122 may be supplied to the antenna port. In a receive mode, the signal switch 1150 connects the antenna port 1111 to the receive path input 1131 so that the receive signal 1132 may be received from the antenna port 1111.

A further function of the transmit/receive switch 1150 is to protect the input amplifier 1133 from a damage caused by the high power of the transmit signal 1122 by isolating the receive path 1130 from the transmit path 1120 during the transmit mode. There still remains a leaking portion 1125 of the transmit signal which is transferred to the receive path input 1131. This leaking portion 1125, however, is attenuated so much that it cannot damage the input amplifier 1133.

Further, the transmit/receive switch 1150 avoids that the transmit path 1120 or the receive path 1130 are a load for the respective other path so that they do not negatively affect each other. Since the transmit/receive switch 1150 supplies the full transmit signal 1122 to the antenna port 1111, it has to be rated for the maximum transmit power and therefore becomes bulky with relatively high power loss and expensive.

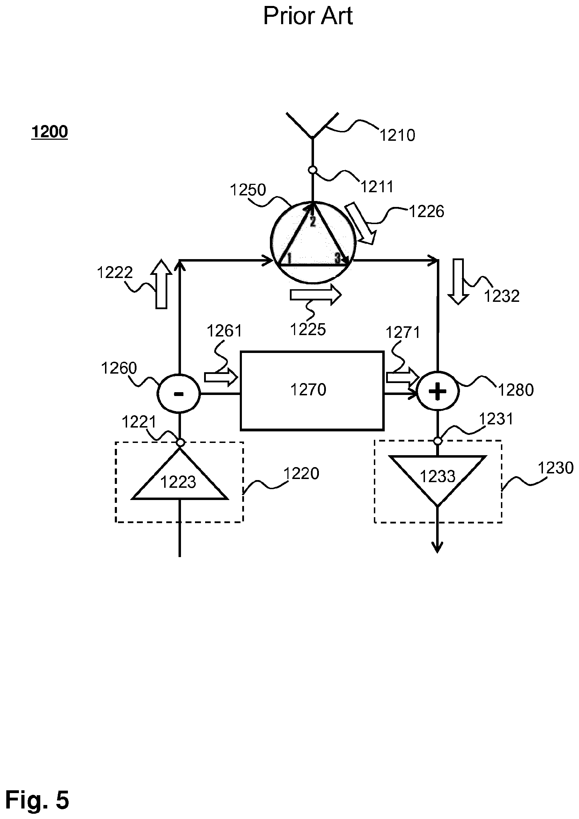

Fig. 5 shows a schematic circuit diagram of a conventional radio frequency front end for full-duplex operation. Similar as the radio frequency front end 1100, the radio frequency front end 1200 comprises an antenna port 1211 to which an antenna 1210 is connected, a transmit path 1220 for supplying a transmit signal 1222 to the antenna port, and a receive path 1230 for receiving a receive signal 1232 from the antenna port. The transmit path 1220 comprises an output amplifier 1223, for example a power amplifier, the output of which is connected to a transmit path output 1221. The receive path 1230 comprises an input amplifier 1233, for example a low-noise amplifier, the input of which is connected to a receive path input 1231.

A circulator 1250 is connected to the antenna port 1211, the transmit path output 1221, and the receive path input 1231. Circulators are usually three-port devices that transfer a signal either clockwise or counter clockwise from port to port while isolating the signal from traveling in the reverse direction. Thus, the transmit signal 1222 can be supplied from the transmit path output 1221 to the antenna port 1211, and the receive signal 1232 can be supplied from the antenna port 1211 to the receive path input 1231. However, the transmit signal 1222 is inhibited from reaching the receive path input 1231, or at least is attenuated.

This isolation is typically in the range of 15 dB so that a leaking portion 1225 of the transmit signal 1222 still reaches the receive path input 1231. Another portion of the transmit signal 1222 may be reflected by the antenna 1210 and reach, as a reflected portion 1226, the receive path input 1231 via the circulator 1250 using the signal path provided for the receive signal 1232.

To improve the isolation of the receive path 1230 from the transmit path 1220, the radio frequency front end 1200 further comprises a divider 1260 for branching-off a portion 1261 from the transmit signal 1222, a filter 1270 for processing the branched-off portion 1261, and a combiner 1280 for combining the processed branched-off portion 1271 with a signal at the receive path input 1231. The filter 1270 is an SIC-filter configured to process the branched-off portion 1261 so that it will cause self-interference cancellation (SIC) with the portions of the transmit signal 1222 that have reached the receive path input 1232. Such a full-duplex front-end having a second stage of cancellation is for example described in "Full Duplex Radios", by: Dinesh Bharadia, Emily McMilin, Sachin Katti, Stanford University, in Proceedings of the ACM SIGCOMM 2013 conference on SIGCOMM, Pages 375-386.

An advantage of a full-duplex front end is that by the simultaneous transmit/receive mode, the channel throughput theoretically may be doubled. On the other hand, there are disadvantages in that there are additional power losses at the transmit path and the receive path due to the elements used for the self-interference cancellation, that additional hardware is required and that additional space on the printed circuit board or on an integrated semiconductor chip is required. Even if the full-duplex front 1200 can also support half-duplex operation, the half-duplex performance is reduced by these losses in comparison to the dedicated half-duplex front 1100.

There are good motivations including "legacy", specific scenarios and cost/benefit considerations hinting that current half-duplex systems should not be replaced by full-duplex but rather complemented by an full-duplex mode. It is therefore desirable to support both operation modes in a single radio frequency front end with a performance similar to or better than the one of the radio frequency front end specifically dedicated to one of the modes.

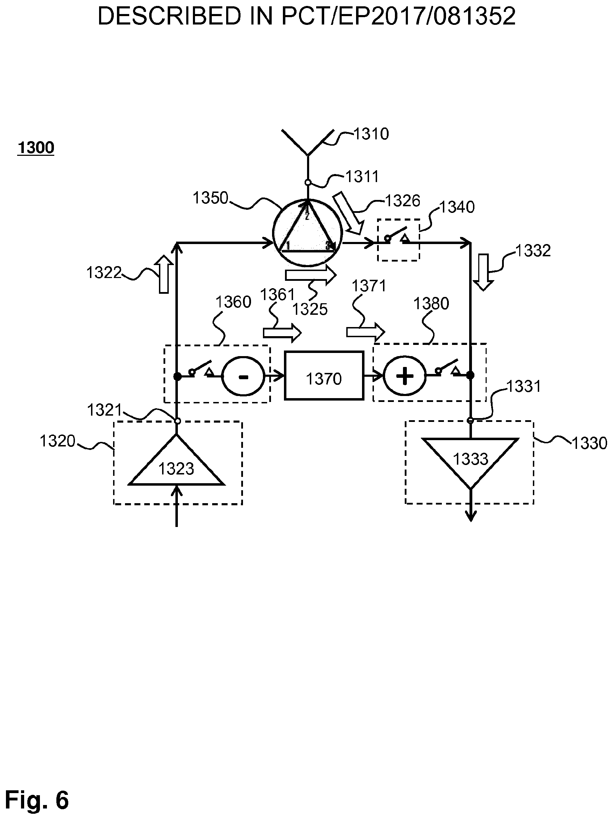

Fig. 6 shows a schematic circuit diagram of a radio frequency front end internally known to the inventors. It supports both full-duplex operation and half-duplex operation, wherein half-duplex is performed with an improved performance over the full-duplex front end 1200. Such a front-end is described in the international patent application PCT/EP 2017/081352.

Similar as the radio frequency front end 1200, the radio frequency front end 1300 comprises an antenna port 1311 to which an antenna 1310 is connected, a transmit path 1320 for supplying a transmit signal 1322 to the antenna port, and a receive path 1330 for receiving a receive signal 1332 from the antenna port. The transmit path 1320 comprises an output amplifier 1323, for example a power amplifier, the output of which is connected to a transmit path output 1321. The receive path 1330 comprises an input amplifier 1333, for example a low-noise amplifier, the input of which is connected to a receive path input 1331.

A circulator 1350 is connected to the antenna port 1311, the transmit path output 1321, and the receive path input 1331. The radio frequency front end 1300 further comprises a divider 1360 for branching-off a portion 1361 from the transmit signal 1322, a filter 1370 for processing the branched-off portion 1361, and a combiner 1380 for combining the processed branched-off portion 1371 with a signal at the receive path input 1331. The filter 1370 is an SIC-filter configured to process the branched-off portion 1361 so that it will cause self-interference cancellation (SIC) with the portions of the transmit signal 1322 that have reached the receive path input 1332. Similar as in the radio frequency front end 1200, a leaking portion 1325 and a reflected portion 1326 of the transmit signal 1322 reach the receive path input 1331 and are compensated via the SIC-filter 1370.

Different from the radio frequency front end 1200, a transmit/receive switch 1340 is connected between the circulator 1350 and the receive path input 1331. Further, the signal subtracting device 1360 and the signal adding device 1380 can be switched between a state in which signal subtraction or addition is performed, and a state in which the transmit signal and or the receive signal are transmitted without change.

The transmit/receive switch 1340 is closed in a full-duplex operation mode and in a half-duplex receive operation mode, and it is opened in a half-duplex transmit operation mode. Further, the signal subtracting device 1360 and the signal adding device 1380 are switched into state in which signal subtraction or addition is performed in the full-duplex operation mode, and they are switched into the state in which the transmit signal and or the receive signal are transmitted without change in the half-duplex transmit operation mode and in the half-duplex receive operation mode.

With this structure, a full-duplex operation can be achieved with essentially the same performance as with the full-duplex front end 1200. The performance In the half-duplex transmit and receive operation modes, however, is essentially improved because the elements used for the self-interference cancellation are disconnected from the transmit and receive paths so that the additional losses caused by them are avoided. The performance may even be better than with a conventional half-duplex front end because the transmit/receive switch used does not have to be of a high-power and high-isolation type. Nevertheless, this structure still includes a bulky and expensive circulator.

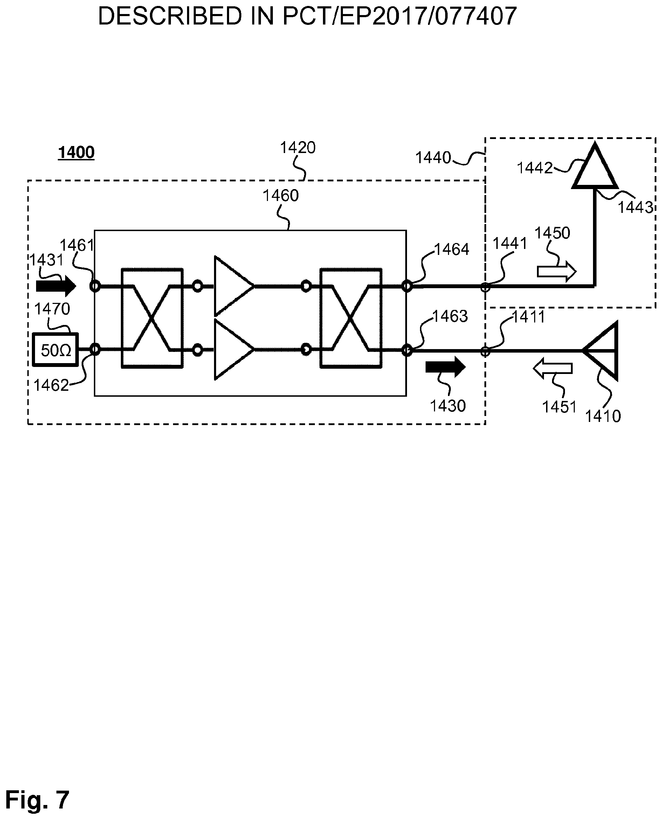

Fig. 7 shows a schematic circuit diagram of another radio frequency front end internally known to the inventors which also supports both full-duplex operation and half-duplex operation. It provides an isolation between the transmit path and the receive path without the need of bulky elements such as a circulator or a transmit/receive switch. Such a front-end is described in the international patent application PCT/EP 2017/077407.

The radio frequency front end 1400 comprises a transmit path 1420, a receive path 1440, and an antenna port 1411 to which an antenna 1410 is connected. The transmit path 1420 comprises a quadrature balanced power amplifier 1460 having a signal input port 1461, an input isolated port 1462, a signal output port 1463, and an output isolated port 1464. A termination element 1470 is connected to the input isolated port 1462. The signal output port 1463 is connected to the antenna port 1411. The receive path 1440 has a receive path input 1441 which is connected to the output isolated port 1464. The receive path 1440 comprises an input amplifier 1442, the input 1443 of which is connected to the receive signal input 1441.

In a transmit mode, an input signal 1431 is divided into two components which are amplified separately and then combined again. By the phase differences occurring during the signal division and combination, the two components constructively interfere with each other at the signal output port 1463 to form a transmit signal 1430 which is supplied to the antenna 1410. On the other hand, the two components destructively interfere with each other at the output isolated port 1464 to cancel each other so that the required isolation between the transmit path and the receive path is provided.

In a receive mode, a signal 1451 delivered by the antenna is divided into two components which are reflected at amplifier outputs of the quadrature balanced power amplifier 1460 and then combined again. By the phase differences occurring during the signal division and combination, the two components constructively interfere with each other at the output isolated port 1464 to form a receive signal 1450 which is supplied to the input amplifier 1442. On the other hand, the two components destructively interfere with each other at the signal output port 1463 to cancel each other so that the input insertion loss is as low as possible.

With this structure, transmit mode and receive mode may be carried out simultaneously or separately, thus enabling both full-duplex and half-duplex operation. The required isolation between the transmit path and the receive path is provided without the need of bulky elements. However, this structure does not provide a cancellation of a portion of the transmit signal reflected by the antenna.

It is therefore desirable to provide the required insulation without bulky elements such as a circulator or a transmit/receive switch, but compensating also a portion of the transmit signal reflected by the antenna. Desired attributes of such a dual-mode front end are, among others:

- Adequate transmit power handling,
- Good transmit/receive isolation,
- Low insertion loss on both transmit and receive paths.

SUMMARY

It is therefore an object of the present invention to provide a radio frequency front end for wireless communication in which a sufficient isolation between the transmit path and the receive path can be provided, including a cancellation of a portion of a transmit signal reflected by an antenna and transferred to the receive path, without the need of bulky elements and without the need or with a reduced need of providing additional circuitry for self-interference-cancellation.

The foregoing and other objects are achieved by the features of the independent claims. Further implementation forms are apparent from the dependent claims, the descriptions and the figures.

It shall further be understood that an embodiment of the invention can also be any combination of the dependent claims with the respective independent claims.

These and other aspects of the invention will be apparent and elucidated with reference to the embodiments described hereinafter.

BRIEF DESCRIPTION OF THE DRAWINGS

Fig. 1    is a schematic circuit diagram of a radio frequency front end according to an embodiment of the present invention.

Fig. 2    is a simplified S-parameter signal flow diagram for the radio frequency front end shown in Fig. 1.

Fig. 3    is a schematic block diagram of a modification of a quadrature balanced power amplifier used in the radio frequency front end according to an embodiment of the present invention.

Fig. 4    is a schematic circuit diagram of a known radio frequency front end for half-duplex operation.

Fig. 5    is a schematic circuit diagram of a known radio frequency front end for full-duplex operation.

Fig. 6    is a schematic circuit diagram of a dual-mode front end described in PCT/EP 2017/081352.

Fig. 7    is a schematic circuit diagram of another dual-mode front end described in PCT/EP 2017/077407.

DETAILED DESCRIPTION

In the following, embodiments of the invention are described with reference to the enclosed figures.

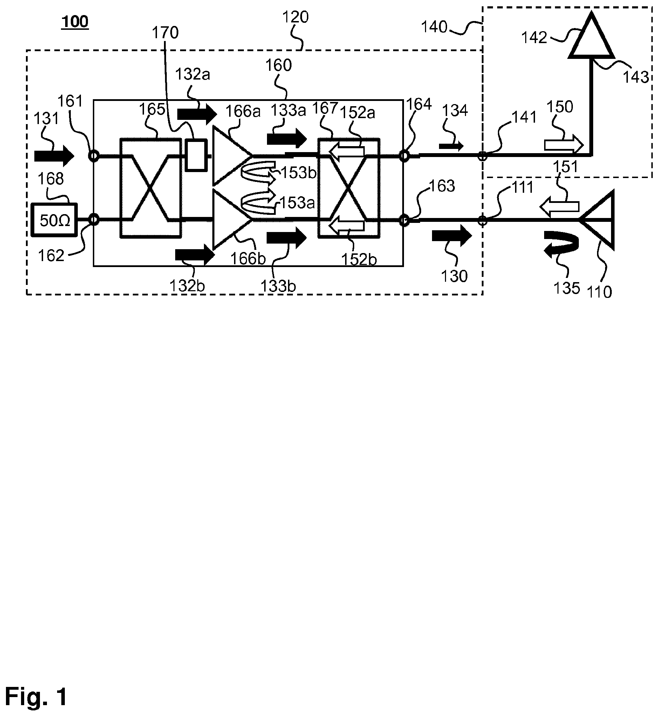

Fig. 1 shows a schematic circuit diagram of a radio frequency front end according to an embodiment. The radio frequency front end 100 comprises a transmit path 120 and a receive path 140. The radio frequency front end 100 further comprises an antenna port 111 to which an antenna 110 is connected.

The transmit path 120 comprises a modified quadrature balanced power amplifier 160. The modified quadrature balanced power amplifier 160 has four ports: a signal input port 161, an input isolated port 162, a signal output port 163, and an output isolated port 164. The signal output port 163 is connected to the antenna port 111.

The modified quadrature balanced power amplifier 160 comprises an input coupler 165, two power amplifiers 166a, 166b, and an output coupler 167. A first input of the input coupler 165 is connected to the signal input port 161, and a second input is connected to the input isolated port 162. A first output of the input coupler 165 is connected to an input of the first power amplifier 166a, and a second output of the input coupler 165 is connected to an input of the second power amplifier 166b. An output of the first power amplifier 166a is connected to a first input of the output coupler 167, and an output of the second power amplifier 166b is connected to a second input of the output coupler 167. A first output of the output coupler 167 is connected to the signal output port 163, and a second output of the output coupler 167 is connected to the output isolated port 164. A termination element 168 is connected to the input isolated port 162.

The receive path 140 has a receive signal input 141 and comprises an input amplifier 142. The input amplifier 142 may be a low noise amplifier in order to be capable of processing even small signals with a sufficient signal-to-noise ratio. A signal input 143 of the input amplifier 142 is connected to the receive signal input 141 of the receive path 140.

In order to generate a transmit signal 130 which is supplied to and radiated by the antenna 110, an input signal 131 is supplied to the signal input port 161 of the balanced power amplifier 160 and thereby to the input coupler 165 which in the present case operates as a signal divider.

The input coupler 165 may be a 3dB/90° coupler that operates as follows: The input signal 131 is divided into two coupler output signals 132a, 132b having the same amplitude. Each of the coupler output signals 132a, 132b has a signal level reduced by 3dB with regard to the input signal 131. Further, the second coupler output signal 132b has a relative phase of 90° compared with the phase of the first coupler output signal 132a.

For an optimum operation of the input coupler 165, all its inputs and outputs should be connected to an impedance matching the characteristic impedance of the input coupler 165. In RF technology, the characteristic impedances of most circuits and transmission lines used generally is 50Ω. For this purpose, the unused port of the input coupler 165 which is connected to the input isolated port 162 is terminated by the termination element 168 which in the present case also has an impedance of 50Ω.

Each of the coupler output signals 132a, 132b is then supplied to an input of a corresponding power amplifier 166a, 166b. The power amplifiers 166a, 166b form a first and second transmit signal path and serve for amplifying the coupler output signals 132a, 132b to obtain amplified signals 133a, 133b. The two amplified signals 133a, 133b are then supplied to the two inputs of the output coupler 167 which in the present case operates as a signal combiner.

The output coupler 167 may be a 3dB/90° coupler that operates as follows: In a similar way as in the input coupler 165, the two amplified signals 133a, 133b are divided each into two components having the same amplitude and a phase shift of 90° with regard to each other.

In a conventional quadrature balanced power amplifier, the amplification factors or gains of the two power amplifiers have, within given tolerances, the same magnitude and phase so that also the two amplified signals have approximately the same amplitude and a phase difference of approximately 90°. In the present embodiment, however, a modified quadrature balanced power amplifier is used. The modification consists in that the amplifier is slightly "unbalanced". This means that the magnitude and/or the phase of the amplification factors of the power amplifiers 166a, 166b are intentionally made different from each other.

At the signal output port 163, the components of both the amplified signals 133a, 133b are approximately in phase and constructively interfere with each other to form by their addition the transmit signal 130. At the output isolated port 164, however, the components of both the amplified signals 133a, 133b have a phase difference of approximately 180° and destructively interfere with each other. In a conventional quadrature balanced power amplifier, they would cancel each other. However, since the modified quadrature balanced power amplifier according to the present embodiment is slightly "unbalanced", the two components do not entirely cancel each other, but a feed forward signal 134 remains which is intentionally created for cancelling the effect of a reflected transmit signal 135. For this purpose, the magnitude and/or the phase of the amplification factors of the power amplifiers 166a, 166b are selected so that the feed forward signal 134 corresponds in its amplitude, but has an opposite phase, to a portion of the transmit signal reflected by the antenna 110 and transmitted to the signal output port 163, as will be explained later. Please note that the feed forward signal 134 only is formed from the transmit input signal 131 and that a signal 151 received from the antenna or the reflected transmit signal 135 are not taken into account for its definition.

The radio frequency front end thereby achieves the effect that a significant isolation is provided between the transmit signal 130 and the receive signal input 141 of the receive path 140. No further element such as a transmit/receive switch or a circulator is required for this purpose. Different from the use of a conventional quadrature balanced power amplifier, the use of the modified quadrature balanced power amplifier has the effect that not only a signal leaking from the transmit path to the receive path input is compensated, but also a portion of the transmit signal reflected by the antenna.

In order to generate a receive signal 150 which is supplied to and processed by the receive path 140, a signal 151 received from the antenna 110 is supplied to the signal output port 163 of the modified quadrature balanced power amplifier 160 and thereby to the output coupler 167 which in the present case is operated in the backwards direction and therefore functions as a signal divider.

Similar as described above for the input coupler 165 in the transmit operation, the output coupler 167 in the receive operation divides the signal 151 received from the antenna 110 into two incoming signals 152a, 152b having the same amplitude and a phase difference of 90°. Each of the coupler output signals 152a, 152b is then supplied to an output of a corresponding power amplifier 166a, 166b.

Power amplifiers are designed to deliver maximum power to the load employing power transistors with high output impedance and mostly in a common source or cascade configuration, generally have a high reflection coefficient which yields a low reflection loss. Since power amplifiers generally are operated near saturation in order to achieve an output power as high as possible, not only the small signal reflection coefficient needs to be regarded, but especially a large signal reflection coefficient.

The power amplifiers 166a, 166b used for the present invention may also especially be designed to have a large output reflection coefficient not only at small signal operation, but also at large signal operation. In a half-duplex receive operation mode where no transmit signal is needed, the power amplifiers 166a, 166b may also be switched off in order to achieve high impedances at their output and thus a large output reflection coefficient.

The incoming signals 152a, 152b are therefore largely reflected back at the outputs of the power amplifiers 166a, 166b to obtain reflected signals 153a, 153b. The reflection coefficients of the two power amplifiers 166a, 166b may have the same magnitude and phase so that also the two reflected signals 153a, 153b have the same amplitude, and the relative phase difference of 90° is maintained. The reflected signals 153a, 153b propagate back to the output coupler 167 which now is operated in the forwards direction and therefore functions as a signal combiner in the same way as described above for the transmit operation. That means that also the two reflected signals 153a, 153b are divided each into two components having the same amplitude and a relative phase shift of 90° with regard to each other.

The components of the reflected signals 153a, 153b at the output isolated port 164 are in phase and constructively interfere with each other to form by their addition the receive signal 150. At the signal output port 163, however, the components of both the amplified signals 133a, 133b have a phase difference of 180° and destructively interfere with each other. In an ideal case where the output reflection coefficients of the power amplifiers 166a, 166b have an absolute value of 1, meaning total reflection or no reflection loss, the two components cancel each other at the signal output port 163, and receive signal 150 at the output isolated port 164 equals the signal 151 received from the antenna 110. Otherwise, a slight loss will have to be taken into account. Also the output coupler 167 will provide for a slight loss.

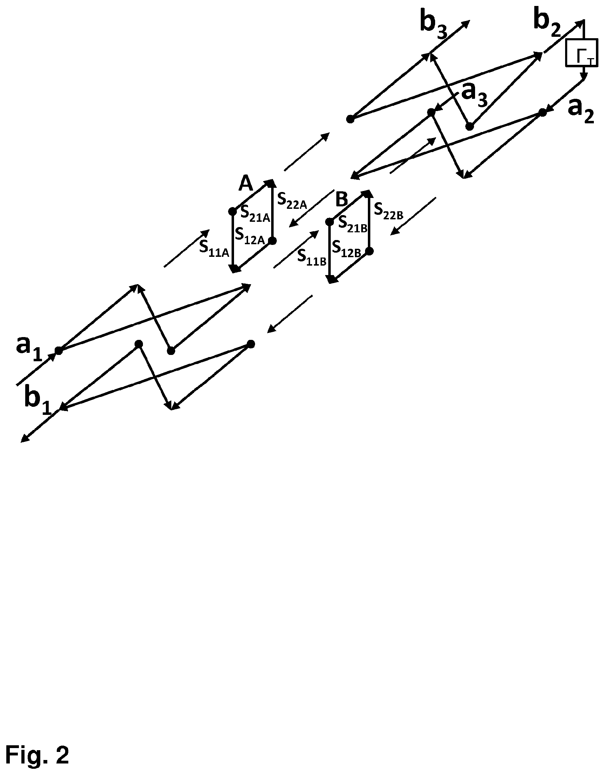

Determining suited magnitudes and/or phases of the amplification factors of the power amplifiers 166a, 166b is described next. For this purpose, Fig. 2 shows a simplified S-parameter signal flow diagram for the radio frequency front end shown in Fig. 1. The arrows a1, a2, and a3 represent the waves propagating towards the signal input port 161, the signal output port 163, and the output isolated port 164, respectively, and the arrows b1, b2, and b3 represent the waves propagating away from those ports, respectively. The antenna is represented by its complex reflection coefficient $\Gamma_\tau$. For simplicity of analysis, the couplers are assumed as ideal 90°-180° quadrature couplers. A and B each represent a linear power amplifier characterized by its S-parameters. At least one of the power amplifiers is phase and/or amplitude configurable.

The overall transmit gain $S_{21\,RFFE}$ of the entire radio frequency front end is given as a phase shifted average of the two $S_{21}$ parameters of the internal amplifiers A, B.

$$S_{21\,RFFE} = \frac{b_2}{a_1} = -\frac{j}{2}\left(S_{21A} + S_{21B}\right) \qquad (1)$$

The overall receive gain $S_{32\,RFFE}$ of the entire radio frequency front end is given as a phase shifted average of the two $S_{22}$ parameters of the internal amplifiers A, B.

$$S_{32\,RFFE} = \frac{b_3}{a_2} = -\frac{j}{2}\left(S_{22A} + S_{22B}\right) \qquad (2)$$

In order for this gain to be as high as possible, which results in a minimum receive loss, both the output reflection coefficients $S_{22A}$, $S_{22B}$ should be very close to one in amplitude (full reflection) and have minimal phase difference between them.

The overall gain $S_{31\ RFFE}$ of the entire radio frequency front end from the signal input port 161 to the output isolated port 164 is given by:

$$S_{31\ RFFE} = \frac{b_3}{a_1} = -\frac{1}{2}\frac{S_{21\ A}-S_{21B}+\Gamma_T(S_{21A}S_{22B}+S_{21B}S_{22A})}{1-\frac{1}{2}\Gamma_T(S_{22A}-S_{22B})} \tag{3}$$

When there is no antenna reflection ($\Gamma_\tau = 0$), this gain simplifies to the average difference between the two $S_{21}$ parameters of the internal amplifiers A, B. Furthermore when the two $S_{21}$ parameters are identical, this gain become zero and the isolation from the signal input port 161 to the output isolated port 164, and thus to the receive signal input 141 of the receive path 140, is perfect.

When the antenna reflection is not negligible, the two $S_{21}$ parameters are identical and the output reflection coefficients $S_{22}$ are equal and almost 1, formula (3) may be approximated by:

$$S_{31\ RFFE} \approx -\Gamma_T \cdot S_{21\ RFFE} \tag{4}$$

This shows that an interference from the transmit path to the receive path in a symmetrical quadrature balanced amplifier is dominated by the antenna reflection. This is very similar to the performance of the circuit with the circulator in the full-duplex front end 1200 that will be mostly dominated by the antenna reflection in practical setups.

In the following, the equation $S_{31\ RFFE} = 0$ will be solved for $\Gamma_\tau \neq 0$, assuming that

$S_{22A} = S_{22B} = S_{22}$. This is not a requirement for the present embodiment, but it simplifies the demonstration of the effect of the embodiment. Further, this assumption is preferable for a reconstruction of the input signal 151 from the reflected signals 153a, 153b. Under this assumption, formula (3) results in:

$$\frac{S_{21\ A}-S_{21\ B}}{S_{21\ A}+S_{21\ B}} = -\Gamma_T \cdot S_{22} \tag{5}$$

It is evident that for meeting this condition, i.e. for minimizing a signal transmission from the signal input port 161 to the output isolated port 164 and thus improving isolation, it is required that the $S_{21}$ parameters of the internal amplifiers A, B are different from each other. For this purpose, the power amplifiers 166a, 166b of the modified quadrature balanced amplifier 160 used in the present embodiment are configured or configurable in a way that a magnitude and/or a phase of their amplification factors differ from each other.

If the antenna reflection factor $\Gamma_\tau * S_{22}$ is purely real or purely imaginary, a solution for formula (5) can easily be found. A purely real $\Gamma_\tau * S_{22}$ results in a relation of $S_{21A} = \alpha * S_{21B}$ wherein $\alpha$ is real constant. A purely imaginary $\Gamma_\tau * S_{22}$ results in a relation of $S_{21A} = S_{21B} * e^{-j\varphi}$ wherein $\varphi$ is a phase shift. It can be shown that for the practical case of similar variations of $S_{21A}$ and $S_{21B}$ over frequency, and hence nearly frequency independent ratio, $S_{21A}(f)/S_{21B}(f)$, the left side of formula (5) is effectively frequency independent.

It is pointed out that $|S_{22A}| \approx 1$ is highly desirable for keeping the receive loss minimal. Hence, $S_{22}$ will mostly affect the phase of the right side of (5). As a result, $\Gamma_\tau$ behavior is crucial, and when designing the front end for better a isolation over a bandwidth, it may be helpful to know in advance the physical interfaces on the path to the antenna, such as a band pass filter and the equivalent antenna reflection. One may even consider the design of $\Gamma_\tau$ such that its phase contribution will cancel out with the phase of $S_{22}$ in order to increase the bandwidth of cancellation.

In the following, some examples are described how the power amplifiers 166a, 166b of the modified quadrature balanced amplifier 160 used in the present embodiment may be configured or configurable in a way that a magnitude and/or a phase of their amplification factors differ from each other. The present embodiment, however, is not restricted to these examples.

For a specific application in which the antenna reflection factor $\Gamma_\tau$ is known in advance, the amplification factors may, for example, also be designed in advance based on the given antenna reflection factor $\Gamma_\tau$ to meet the condition of formula (5). It is thus possible to produce a modified quadrature balanced amplifier dedicated to the specific application without the need of being adjusted prior to operation.

However, it is also possible to use power amplifiers having predetermined, possibly equal, amplification factors. In this case, a magnitude and/or a phase of the amplification factor of at least one of the power amplifiers may for example be adjusted using an adjusting element 170. Such an adjusting element is preferably arranged at an input side of the power amplifier so that it does not change the output reflection factor. Depending on the type of adjustment needed, the adjusting element 170 may for example include a controllable attenuator and/or a controllable phase shifter.

Adjustment may then be carried out by supplying an input signal 131 to the signal input port 161 and measuring a

**EP 3 735 748 B1**

signal at the output isolated port 164 using the receive path 140. This signal is composed by the feed forward signal 134 resulting from the incomplete cancellation of the amplified signals 133a, 133b generated from the input signal 131, and by a signal resulting from a portion of the transmit signal reflected by the antenna and transmitted to the signal output port 163. The input signal 131 is attenuated so much that the feed forward signal 134 formed at the output isolated port 164 cannot damage the low-noise input amplifier 142. Attenuation and/or phase of the adjusting element 170 is the modified so that the signal measured via the receive path 140 reaches zero (or at least a minimum).

Since the output isolated port 164 is connected to the receive signal input 141 of the receive path 140, it is possible to supply the signal 151 received from the antenna 110 to the receive signal input 141 of the receive path 140 with no or only a small loss. Further, neither a dedicated isolation device such as a circulator nor an isolation switch has to be used. Even if such bulky, expensive, or wavelength-sensitive are not used, a significant isolation is nevertheless provided between the transmit signal 130 and the receive signal input 141 of the receive path 140, including a cancellation of a portion of the transmit signal reflected by an antenna and transferred to the receive path, as described above. Further, a low insertion loss on the transmit and receive paths can be achieved.

Further, all the components of the radio frequency front end are capable of being integrated on a RF printed circuit board or substrate as well as with Monolithic Microwave Integrated Circuits or Radio Frequency Integrated Circuits. Thereby, a small size (especially a reduced height) and a low weight may be achieved. Further, the costs for such a radio frequency front end can be reduced, especially if it is integrated.

Different integration technologies may be used for integrating the couplers, for example a branch line on an RF board (yielding about 10% bandwidth), Lang couplers on an RF board, on Monolithic Microwave Integrated Circuits or on Radio Frequency Integrated Circuits (yielding a wide bandwidth), 3 dB Coupled lines on ceramics or on Radio Frequency Integrated Circuits (yielding a wide bandwidth) or lumped elements in different technologies. For solutions in which the isolation is similar to ferrite circulators (about 20 dB), bandwidth and insertion loss in most implementations may be improved.

In a simulation of the dual-mode front end 100 according to the present embodiment at a frequency of 2.4 GHz, the following results were achieved. As a comparison, the corresponding results of the prior art front ends 1100 and 1200 are also shown. Therein, a transmit/receive switch of the type SKY13370-374LF by Skyworks Solutions was used in the half-duplex front end 1100, and a circulator of the type SDC 1721 by SMT was used for the full-duplex front end 1100.

| Parameter | front end 100 | front end 1100 | front end 1200 |
|---|---|---|---|
| TX insertion loss | 0 dB | 0.7 dB | 0.4 dB |
| RX insertion loss | 1-2 dB | 0.7 dB | 0.4 dB |
| Isolation | 30 dB | 30 dB | 14 dB |

The present embodiment thus enables a dual-mode operation while maintaining or improving the performance of the known single mode architectures. A bulky and expensive element such as a circulator or a transmit/receive switch is not required, so that space and costs can be reduced compared with the prior art front ends shown in Fig. 4 to 6. Further, also a portion of the transmit signal reflected by the antenna is compensated so that the performance can be improved compared with the prior art front end shown in Fig. 7. Since an additional self-interference cancellation is "built in" in the structure of the front end 100 of the present embodiment, special SIC components such as in the prior art front end 1200 may no longer be required or at least may be needed to a lesser degree. This may help to reduce also the losses of branching-off and summing (cf. elements 1260, 1280 in Fig. 5) as now the signal remaining to be canceled is significantly lower than in the prior art front end 1200. If those components are provided, they may be disconnected during the half-duplex transmit and receive operation like in the dual-mode front end 1300.

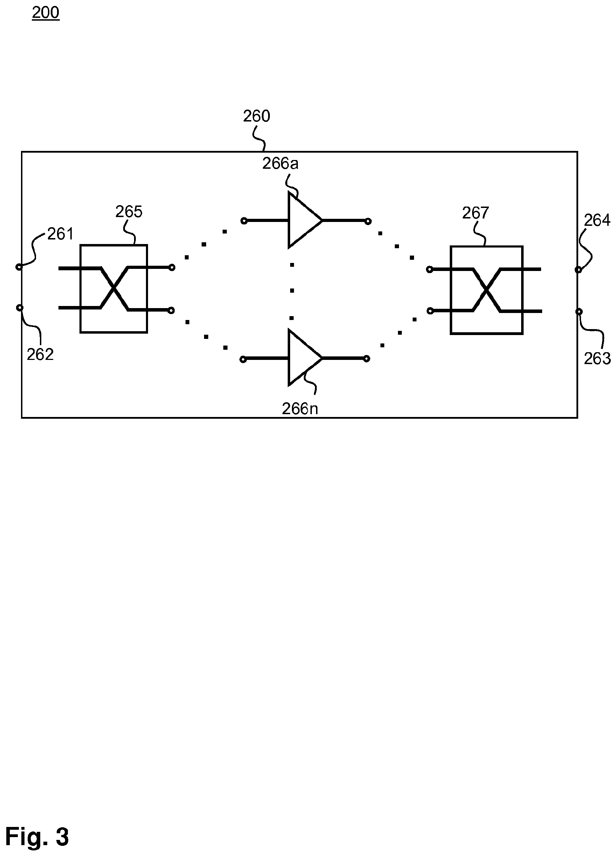

The modified quadrature balanced power amplifier that may be used for the radio frequency front end is not restricted to the example described in the embodiment. Fig. 3 shows a schematic block diagram of a modification of the modified quadrature balanced power amplifier described above.

Similar as the modified quadrature balanced power amplifier 160 described above, the modified quadrature balanced power amplifier 260 shown in Fig. 3 has a signal input port 261, an input isolated port 262, a signal output port 263, and an output isolated port 264. It further comprises an input coupler 265 and an output coupler 267. It differs from the modified quadrature balanced power amplifier 160 in that it further comprises a predetermined number n of power amplifiers 266a-266n. Those power amplifiers may for example be divided into two groups, wherein the power amplifiers of the same group are connected in parallel, for example by directly connecting the inputs in parallel and by connecting the outputs in parallel, or by using equal phase dividers and combiners at the input and output side, respectively. Each of the two groups of power amplifiers such corresponds to one of the power amplifiers 166a, 166b of Fig. 1. At least one of the power amplifiers 266a-266n is configured or configurable so that a magnitude and/or a phase of its amplification factor differs from the amplification factors of the other power amplifiers.

8

On the other hand, the modified quadrature balanced power amplifier 260 may further comprise additional input and output couplers which are not shown in the figure, but only schematically symbolized by an ellipsis. The additional input and output couplers are arranged in a way that a signal supplied to the signal input port 261 is divided in more than two coupler output signals, each of which is amplified by a corresponding power amplifier 266a-266n (or by a group of power amplifiers connected in parallel, as described above), and that the resulting amplified signals are combined to form a transmit signal at the signal output port 263 and to cancel each other at the output isolated port 264 in so far that only a signal adapted to cancel a portion of the transmit signal reflected by the antenna remains. It also has to be made sure that a signal received by the antenna and supplied to the signal output port 263 is sufficiently reflected by the stages before a final combiner constructively adds its components at the output isolated port 264 to form the receive signal supplied to the receive path.

The effects of such a modified quadrature balanced power amplifier 260 are the same as indicated above for the modified quadrature balanced power amplifier 160, while a larger output power can be achieved.

In the above embodiments, achieving the effect that the components of the amplified signals 133a, 133b that constructively add each other at the signal output port 163 to form the transmit signal 130 and reduce each other at the output isolated port 164 to form the feed forward signal 134 have an amplitude different from each other and/or a phase between each other different from 0° at the signal output port 163 and/or different from 180° at the output isolated port 164 is achieved by changing a magnitude or a phase of an amplification factor of at least one of the power amplifiers. Additionally or alternatively, the input coupler 165 and/or the output coupler 167 may be configured or configurable to achieve this effect. In this case, for example, the input coupler 165 and/or the output coupler 167 may perform a signal division in a way that the resulting signals do not have the same amplitude, and/or not a phase difference of 90° between each other.

In summary, the present invention relates to a radio frequency front end for wire-less communication, especially to a radio frequency front end in which transmitting and receiving is performed using the same antenna. The radio frequency front end for wireless communication, comprises an antenna port for connecting an antenna, a receive path comprising a receive signal input for receiving a receive signal, and a transmit path comprising a modified quadrature balanced power amplifier. The modified quadrature balanced power amplifier comprises a transmit signal input port for receiving a transmit input signal, at least a first transmit signal path for amplifying a first portion of the transmit input signal and a second transmit signal path for amplifying a second portion of the transmit input signal, a transmit signal output port for supplying a transmit signal generated from the amplified first portion and the amplified second portion to the antenna port, and an output isolated port connected to the receive signal input. The first transmit signal path and/or the second transmit signal path are configured or configurable so that a magnitude and/or a phase of their amplification factors differ from each other.

While the present invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to a person skilled in the art. Such modifications may involve other features, which are already known in the art and may be used instead of or in addition to features already described herein.

The invention has been described in conjunction with various embodiments herein. However, other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1.  A radio frequency front end (100) for wireless communication, comprising:

    an antenna port (111) for connecting an antenna (110),
    a receive path (140) comprising a receive signal input (141) for receiving a receive signal (150), and
    a transmit path (120) comprising a modified quadrature balanced power amplifier (160) that comprises

        - a transmit signal input port (161) for receiving a transmit input signal (131),
        - at least a first transmit signal path (165, 170, 166a, 167) for amplifying a first portion (132a) of the transmit input signal (131) and a second transmit signal path (165, 166b, 167) for amplifying a second portion (132b) of the transmit input signal (131),
        - a transmit signal output port (163) for supplying a transmit signal (130) generated from the amplified first portion (133a) and the amplified second portion (133b) to the antenna port (111), and

- an output isolated port (164) connected to the receive signal input (141),

wherein each of said at least first transmit signal path (165, 170, 166a, 167) and second transmit signal path (165, 166b, 167) comprises at least one power amplifier (166a, 166b) configured to amplify one of the first portion (132a) and second portion (132b) of the transmit input signal (131), wherein amplification factors of the power amplifiers (166a, 166b) have a magnitude and a phase,

**characterized in that** the power amplifiers (166a, 166b) are configured or configurable so that the magnitude and/or phase of their amplification factors differ from each other in a way that a feed forward signal (134) is formed at the output isolated port (164) which corresponds to a portion of the transmit signal reflected by the antenna (110) and transmitted to the output isolated port (164) in amplitude, but with an opposite phase.

2. The radio frequency front end (100) according to claim 1, wherein the modified quadrature balanced power amplifier (160) further comprises:

at least one input coupler (165) configured to divide the input signal (131) into at least two coupler output signals (132a, 132b),
at least the first transmit signal path (165, 170, 166a, 167) and/or the second transmit signal path (165, 166b, 167), each for amplifying one of the at least two coupler output signals (132a, 132b) to obtain a respective amplified signal (133a, 133b), and
at least one output coupler (167) configured to combine the amplified signals (133a, 133b) so that the amplified signals (133a, 133b) constructively add each other at the transmit signal output port (163) for obtaining the transmit signal (130), and that the amplified signals (133a, 133b) reduce each other at the output isolated port (164).

3. The radio frequency front end (100) according to claim 2, wherein

the at least one input coupler (165) is configured so that the two coupler output signals (132a, 132b) have a power reduced by 3dB with regard to the transmit input signal (131) and a phase difference of 90° between each other, and/or
the at least one input coupler (165) and/or the at least one output coupler (167) are configured or configurable so that the components of the amplified signals (133a, 133b) that constructively add each other at the transmit signal output port (163) and reduce each other at the output isolated port (164) have an amplitude different from each other and/or a phase difference between each other different from 0° at the signal output port (163) and/or different from 180° at the output isolated port (164).

4. The radio frequency front end (100) according to claim 2 or 3, wherein

hybrid couplers are used for the input coupler (165) and/or the output coupler (167), and/or
the input coupler (165) and/or the output coupler (167) are integrated on a substrate or a semiconductor chip.

5. The radio frequency front end (100) according to any of claims 1 to 4, wherein

the power amplifiers (166a, 166b) are designed to have high output reflection coefficients, and/or
the power amplifiers (166a, 166b) are designed to have equal output reflection coefficients.

6. The radio frequency front end (200) according to any of claims 1 to 5, wherein

the modified quadrature balanced power amplifier (160) comprises more than two transmit signal paths (266a...266n), and
at least one of the transmit signal paths is configured or configurable so that a magnitude and/or a phase of its amplification factor differs from the amplification factors of the other transmit signal paths.

7. The radio frequency front end (100) according to any of claims 1 to 6, wherein
a magnitude and/or a phase of the amplification factor of the transmit signal paths (166a, 166b) is designed in advance based on a given antenna reflection coefficient ($\Gamma_\tau$).

8. The radio frequency front end (100) according to any of claims 1 to 7, wherein
at least one of the transmit signal paths (166a, 166b) comprises an adjusting element (170) by which a magnitude and/or a phase of the amplification factor of the corresponding transmit signal path can be adjusted.

9. The radio frequency front end (100) according to claim 8, wherein
the adjusting element (170) includes a controllable attenuator and/or a controllable phase shifter.

10. The radio frequency front end (100) according to any of claims 1 to 9, wherein an antenna (110) is connected to the antenna port (111).

11. The radio frequency front end (100) according to claim 10, wherein
a reflection factor $\Gamma_\tau$ of the antenna (110) is designed so that its phase cancels out with the phase of an output reflection coefficient of power amplifiers (166a, 166b) comprised in the transmit signal paths.

12. A method of performing a wireless communication using a radio frequency front end (100),

the method comprising transmitting a transmit signal (130) via an antenna (110) and/or receiving a receive signal (150) via the same antenna (110),
wherein transmitting the transmit signal (150) comprises:

- supplying a transmit input signal (131) to a transmit signal input port (161) of a modified quadrature balanced power amplifier (160)
- amplifying a first portion (132a) of the transmit input signal (131) with a first transmit signal path (165, 170, 166a, 167) of the modified quadrature balanced power amplifier (160) and a second portion (132b) of the transmit input signal (131) with a second transmit signal path (165, 166b, 167) of the modified quadrature balanced power amplifier (160), and
- supplying a transmit signal (150) generated at a transmit signal output port (163) of the modified quadrature balanced power amplifier (160) from the amplified first portion (133a) and the amplified second portion (133b) to the antenna (110), and/or

receiving the receive signal (150) comprises supplying a signal (151) received from the antenna (110) to the transmit signal output port (163) of the modified quadrature balanced power amplifier (160) for generating the receive signal (150) at an output isolated port (164) of the modified quadrature balanced power amplifier (160), and supplying the receive signal (150) to a receive signal input (141) of a receive path (140),
wherein each of said at least first transmit signal path (165, 170, 166a, 167) and second transmit signal path (165, 166b, 167) comprises at least one power amplifier (166a, 166b) configured to amplify one of the first portion (132a) and second portion (132b) of the transmit input signal (131), wherein amplification factors of the power amplifiers (166a, 166b) have a magnitude and a phase;
**characterized in that** the power amplifiers (166a, 166b) are configured or configurable so that the magnitude and/or phase of their amplification factors differ from each other in a way that a feed forward signal (134) is formed at the output isolated port (164) which corresponds to a portion of the transmit signal reflected by the antenna (110) and transmitted to the output isolated port (164) in amplitude, but with an opposite phase.

13. The method according to claim 12, wherein the power amplifiers (166a, 166b) are switching-off power amplifiers (166a, 166b).

**Patentansprüche**

1. Funkfrequenz-Frontend (100) für drahtlose Kommunikation, umfassend:

einen Antennenanschluss (111) zum Verbinden einer Antenne (110), einen Empfangsweg (140), umfassend einen Empfangssignaleingang (141) zum Empfangen eines Empfangssignals (150), und
einen Übertragungsweg (120), umfassend einen modifizierten quadraturausgeglichenen Leistungsverstärker (160), der Folgendes umfasst

- einen Übertragungssignaleingangsanschluss (161) zum Empfangen eines Übertragungseingangssignals (131),
- mindestens einen ersten Übertragungssignalweg (165, 170, 166a, 167) zum Verstärken eines ersten Abschnitts (132a) des Übertragungseingangssignals (131) und einen zweiten Übertragungssignalweg (165, 166b, 167) zum Verstärken eines zweiten Abschnitts (132b) des Übertragungseingangssignals (131),
- einen Übertragungssignalausgangsanschluss (163) zum Zuführen eines aus dem verstärkten ersten Abschnitt (133a) und dem verstärkten zweiten Abschnitt (133b) erzeugten Übertragungssignals (130) zu dem Antennenanschluss (111) und
- einen mit dem Empfangssignaleingang (141) verbundenen Ausgangs-Isolationsanschluss (164),

wobei jeder des mindestens ersten Übertragungssignalwegs (165, 170, 166a, 167) und zweiten Übertragungssignalwegs (165, 166b, 167) mindestens einen Leistungsverstärker (166a, 166b) umfasst, der konfiguriert ist, um einen von dem ersten Abschnitt (132a) und zweiten Abschnitt (132b) des Übertragungseingangssignals (131) zu verstärken, wobei Verstärkungsfaktoren der Leistungsverstärker (166a, 166b) eine Größe und eine Phase aufweisen,
**dadurch gekennzeichnet, dass** die Leistungsverstärker (166a, 166b) so konfiguriert oder konfigurierbar sind, dass sich die Größe und/oder Phase ihrer Verstärkungsfaktoren derart voneinander unterscheiden, dass an dem Ausgangs-Isolationsanschluss (164) ein Vorwärtskopplungssignal (134) gebildet wird, das einem Abschnitt des von der Antenne (110) reflektierten und in der Amplitude zu dem Ausgangs-Isolationsanschluss (164) übertragenen Übertragungssignals entspricht, jedoch mit entgegengesetzter Phase.

2.  Funkfrequenz-Frontend (100) nach Anspruch 1, wobei der modifizierte quadraturausgeglichene Leistungsverstärker (160) ferner Folgendes umfasst:

    mindestens einen Eingangskoppler (165), der konfiguriert ist, um das Eingangssignal (131) in mindestens zwei Kopplerausgangssignale (132a, 132b) aufzuteilen,
    mindestens den ersten Übertragungssignalweg (165, 170, 166a, 167) und/oder den zweiten Übertragungssignalweg (165, 166b, 167), jeweils zum Verstärken eines der mindestens zwei Kopplerausgangssignale (132a, 132b), um ein jeweiliges verstärktes Signal (133a, 133b) zu erlangen, und
    mindestens einen Ausgangskoppler (167), der konfiguriert ist, um die verstärkten Signale (133a, 133b) so zu kombinieren, dass sich die verstärkten Signale (133a, 133b) an dem Übertragungssignalausgangsanschluss (163) gegenseitig konstruktiv addieren, um das Übertragungssignal (130) zu erlangen, und dass sich die verstärkten Signale (133a, 133b) an dem Ausgangs-Isolationsanschluss (164) gegenseitig reduzieren.

3.  Funkfrequenz-Frontend (100) nach Anspruch 2, wobei

    der mindestens eine Eingangskoppler (165) so konfiguriert ist, dass die beiden Kopplerausgangssignale (132a, 132b) eine in Bezug auf das Übertragungseingangssignal (131) um 3 dB reduzierte Leistung und einen Phasenunterschied von 90° zwischeneinander aufweisen, und/oder
    der mindestens eine Eingangskoppler (165) und/oder der mindestens eine Ausgangskoppler (167) so konfiguriert oder konfigurierbar sind, dass die Komponenten der verstärkten Signale (133a, 133b), die sich an dem Übertragungssignalausgangsanschluss (163) gegenseitig konstruktiv addieren und an dem Ausgangs-Isolationsanschluss (164) gegenseitig reduzieren, eine voneinander verschiedene Amplitude und/oder eine voneinander verschiedene Phasendifferenz aufweisen, die an dem Signalausgangsanschluss (163) von 0° verschieden ist und/oder an dem Ausgangs-Isolationsanschluss (164) von 180° verschieden ist.

4.  Funkfrequenz-Frontend (100) nach Anspruch 2 oder 3, wobei Hybridkoppler für den Eingangskoppler (165) und/oder den Ausgangskoppler (167) verwendet werden und/oder
    der Eingangskoppler (165) und/oder der Ausgangskoppler (167) auf einem Substrat oder einem Halbleiterchip integriert sind.

5.  Funkfrequenz-Frontend (100) nach einem der Ansprüche 1 bis 4, wobei

    die Leistungsverstärker (166a, 166b) so ausgelegt sind, dass sie hohe Ausgangsreflexionskoeffizienten aufweisen, und/oder
    die Leistungsverstärker (166a, 166b) so ausgelegt sind, dass sie gleiche Ausgangsreflexionskoeffizienten aufweisen.

6.  Funkfrequenz-Frontend (200) nach einem der Ansprüche 1 bis 5, wobei

    der modifizierte quadraturausgeglichene Leistungsverstärker (160) mehr als zwei Übertragungssignalwege (266a...266n) umfasst und

mindestens einer der Übertragungssignalwege so konfiguriert oder konfigurierbar ist, dass sich eine Größe und/oder eine Phase seines Verstärkungsfaktors von den Verstärkungsfaktoren der anderen Übertragungssignalwege unterscheidet.

7. Funkfrequenz-Frontend (100) nach einem der Ansprüche 1 bis 6, wobei
eine Größe und/oder eine Phase des Verstärkungsfaktors der Übertragungssignalwege (166a, 166b) im Voraus basierend auf einem gegebenen Antennenreflexionskoeffizienten ($\Gamma_\tau$) ausgelegt werden.

8. Funkfrequenz-Frontend (100) nach einem der Ansprüche 1 bis 7, wobei
mindestens einer der Übertragungssignalwege (166a, 166b) ein Einstellelement (170) umfasst, mit dem eine Größe und/oder eine Phase des Verstärkungsfaktors des entsprechenden Übertragungssignalwegs eingestellt werden kann.

9. Funkfrequenz-Frontend (100) nach Anspruch 8, wobei
das Einstellelement (170) einen steuerbaren Abschwächer und/oder einen steuerbaren Phasenschieber beinhaltet.

10. Funkfrequenz-Frontend (100) nach einem der Ansprüche 1 bis 9, wobei eine Antenne (110) mit dem Antennenanschluss (111) verbunden ist.

11. Funkfrequenz-Frontend (100) nach Anspruch 10, wobei
ein Reflexionsfaktor $\Gamma_\tau$ der Antenne (110) so ausgelegt ist, dass sich seine Phase mit der Phase eines Ausgangsreflexionskoeffizienten von Leistungsverstärkern (166a, 166b), die von den Übertragungssignalwegen umfasst sind, aufhebt.

12. Verfahren zum Durchführen einer drahtlosen Kommunikation mithilfe eines Funkfrequenz-Frontends (100),

wobei das Verfahren ein Übertragen eines Übertragungssignals (130) über eine Antenne (110) und/oder ein Empfangen eines Empfangssignals (150) über dieselbe Antenne (110) umfasst, wobei das Übertragen des Übertragungssignals (150) Folgendes umfasst:

- Zuführen eines Übertragungeingangssignals (131) zu einem Übertragungssignaleingangsanschluss (161) eines modifizierten quadraturausgeglichenen Leistungsverstärkers (160)
- Verstärken eines ersten Abschnitts (132a) des Übertragungeingangssignals (131) mit einem ersten Übertragungssignalweg (165, 170, 166a, 167) des modifizierten quadraturausgeglichenen Leistungsverstärkers (160) und eines zweiten Abschnitts (132b) des Übertragungeingangssignals (131) mit einem zweiten Übertragungssignalweg (165, 166b, 167) des modifizierten quadraturausgeglichenen Leistungsverstärkers (160) und
- Zuführen eines an einem Übertragungssignalausgangsanschluss (163) des modifizierten quadraturausgeglichenen Leistungsverstärkers (160) erzeugten Übertragungssignals (150) aus dem verstärkten ersten Abschnitt (133a) und dem verstärkten zweiten Abschnitt (133b) zu der Antenne (110) und/oder

Empfangen des Empfangssignals (150), umfassend ein Zuführen eines von der Antenne (110) empfangenen Signals (151) zu dem Übertragungssignalausgangsanschluss (163) des modifizierten quadraturausgeglichenen Leistungsverstärkers (160) zum Erzeugen des Empfangssignals (150) an einem Ausgangs-Isolationsanschluss (164) des modifizierten quadraturausgeglichenen Leistungsverstärkers (160) und ein Zuführen des Empfangssignals (150) zu einem Empfangssignaleingang (141) eines Empfangswegs (140),
wobei jeder des mindestens ersten Übertragungssignalwegs (165, 170, 166a, 167) und zweiten Übertragungssignalwegs (165, 166b, 167) mindestens einen Leistungsverstärker (166a, 166b) umfasst, der konfiguriert ist, um einen von dem ersten Abschnitt (132a) und zweiten Abschnitt (132b) des Übertragungeingangssignals (131) zu verstärken, wobei Verstärkungsfaktoren der Leistungsverstärker (166a, 166b) eine Größe und eine Phase aufweisen;
**dadurch gekennzeichnet, dass** die Leistungsverstärker (166a, 166b) so konfiguriert oder konfigurierbar sind, dass sich die Größe und/oder Phase ihrer Verstärkungsfaktoren derart voneinander unterscheiden, dass an dem Ausgangs-Isolationsanschluss (164) ein Vorwärtskopplungssignal (134) gebildet wird, das einem Abschnitt des von der Antenne (110) reflektierten und in der Amplitude zu dem Ausgangs-Isolationsanschluss (164) übertragenen Übertragungssignals entspricht, jedoch mit entgegengesetzter Phase.

13. Verfahren nach Anspruch 12, wobei die Leistungsverstärker (166a, 166b) Abschalt-Leistungsverstärker (166a, 166b) sind.

**Revendications**

1. Frontal radiofréquence (100) pour communication sans **fil,** comprenant :

   un port d'antenne (111) pour connecter une antenne (110),
   un trajet de réception (140) comprenant une entrée de signal de réception (141) pour recevoir un signal de réception (150), et
   un trajet de transmission (120) comprenant un amplificateur de puissance équilibré en quadrature modifié (160) qui comprend

   - un port d'entrée de signal de transmission (161) pour recevoir un signal d'entrée de transmission (131),
   - au moins un premier trajet de signal de transmission (165, 170, 166a, 167) pour amplifier une première partie (132a) du signal **d'entrée** de transmission (131) et un second trajet de signal de transmission (165, 166b, 167) pour amplifier une seconde partie (132b) du signal d'entrée de transmission (131),
   - un port de sortie de signal de transmission (163) pour fournir un signal de transmission (130) généré à partir de la première partie amplifiée (133a) et de la seconde partie amplifiée (133b) au port d'antenne (111), et
   - un port isolé de sortie (164) connecté à l'entrée de signal de réception (141),

   dans lequel chacun desdits au moins premier trajet de signal de transmission (165, 170, 166a, 167) et second trajet de signal de transmission (165, 166b, 167) comprend au moins un amplificateur de puissance (166a, 166b) configuré pour amplifier l'une des première partie (132a) et seconde partie (132b) du signal d'entrée de transmission (131), dans lequel des facteurs d'amplification des amplificateurs de puissance (166a, 166b) ont une amplitude et une phase,
   **caractérisé en ce que** les amplificateurs de puissance (166a, 166b) sont configurés ou configurables de telle sorte que l'amplitude et/ou la phase de leurs facteurs d'amplification diffèrent l'une de l'autre de telle manière qu'un signal de commande prédictive (134) est formé au niveau du port isolé de sortie (164) qui correspond à une partie du signal de transmission réfléchi par l'antenne (110) et transmis au port isolé de sortie (164) en amplitude, mais avec une phase opposée.

2. Frontal radiofréquence (100) selon la revendication 1, dans lequel l'amplificateur de puissance équilibré en quadrature modifié (160) comprend également :

   au moins un coupleur d'entrée (165) configuré pour diviser le signal d'entrée (131) en au moins deux signaux de sortie de coupleur (132a, 132b),
   au moins le premier trajet de signal de transmission (165, 170, 166a, 167) et/ou le second trajet de signal de transmission (165, 166b, 167), chacun pour amplifier l'un des au moins deux signaux de sortie de coupleur (132a, 132b) pour obtenir un signal amplifié respectif (133a, 133b), et
   au moins un coupleur de sortie (167) configuré pour combiner les signaux amplifiés (133a, 133b) de telle sorte que les signaux amplifiés (133a, 133b) s'additionnent de manière constructive au niveau du port de sortie de signal de transmission (163) pour obtenir le signal de transmission (130), et que les signaux amplifiés (133a, 133b) se réduisent l'un l'autre au niveau du port isolé de sortie (164).

3. Frontal radiofréquence (100) selon la revendication 2, dans lequel

   l'au moins un coupleur d'entrée (165) est configuré de telle sorte que les deux signaux de sortie de coupleur (132a, 132b) ont une puissance réduite de 3 dB par rapport au signal d'entrée de transmission (131) et une différence de phase de 90° entre eux, et/ou
   l'au moins un coupleur d'entrée (165) et/ou l'au moins un coupleur de sortie (167) sont configurés ou configurables de telle sorte que les composantes des signaux amplifiés (133a, 133b) qui s'additionnent de manière constructive au niveau du port de sortie de signal de transmission (163) et se réduisent l'un l'autre au niveau du port isolé de sortie (164) ont une amplitude différente l'une de l'autre et/ou une différence de phase différente de 0° entre eux au niveau du port de sortie de signal (163) et/ou différente de 180° au niveau du port isolé de sortie (164).

4. Frontal radiofréquence (100) selon la revendication 2 ou 3, dans lequel

des coupleurs hybrides sont utilisés pour le coupleur d'entrée (165) et/ou le coupleur de sortie (167), et/ou le coupleur d'entrée (165) et/ou le coupleur de sortie (167) sont intégrés sur un substrat ou une puce semi-conductrice.

5. Frontal radiofréquence (100) selon l'une quelconque des revendications 1 à 4, dans lequel

les amplificateurs de puissance (166a, 166b) sont conçus pour avoir des coefficients de réflexion de sortie élevés, et/ou
les amplificateurs de puissance (166a, 166b) sont conçus pour avoir des coefficients de réflexion de sortie égaux.

6. Frontal radiofréquence (200) selon l'une quelconque des revendications 1 à 5, dans lequel

l'amplificateur de puissance équilibré en quadrature modifié (160) comprend plus de deux trajets de signal de transmission (266a...266n), et
au moins l'un des trajets de signal de transmission est configuré ou configurable de telle sorte qu'une amplitude et/ou une phase de son facteur d'amplification diffère des facteurs d'amplification des autres trajets de signal de transmission.

7. Frontal radiofréquence (100) selon l'une quelconque des revendications 1 à 6, dans lequel
une amplitude et/ou une phase du facteur d'amplification des trajets de signal de transmission (166a, 166b) sont conçues à l'avance sur la base d'un coefficient de réflexion d'antenne donné ($\Gamma_\tau$).

8. Frontal radiofréquence (100) selon l'une quelconque des revendications 1 à 7, dans lequel
au moins l'un des trajets de signal de transmission (166a, 166b) comprend un élément de réglage (170) par lequel une amplitude et/ou une phase du facteur d'amplification du trajet de signal de transmission correspondant peuvent être réglées.

9. Frontal radiofréquence (100) selon la revendication 8, dans lequel
l'élément de réglage (170) comporte un atténuateur commandable et/ou un déphaseur commandable.

10. Frontal radiofréquence (100) selon l'une quelconque des revendications 1 à 9, dans lequel une antenne (110) est connectée au port d'antenne (111).

11. Frontal radiofréquence (100) selon la revendication 10, dans lequel
un facteur de réflexion $\Gamma_\tau$ de l'antenne (110) est conçu de telle sorte que sa phase s'annule avec la phase d'un coefficient de réflexion de sortie d'amplificateurs de puissance (166a, 166b) compris dans les trajets de signal de transmission.

12. Procédé de réalisation d'une communication sans fil à l'aide d'un frontal radiofréquence (100), le procédé comprenant la transmission d'un signal de transmission (130) via une antenne (110) et/ou la réception d'un signal de réception (150) via la même antenne (110),

dans lequel la transmission du signal de transmission (150) comprend :

- la fourniture d'un signal d'entrée de transmission (131) à un port d'entrée de signal de transmission (161) d'un amplificateur de puissance équilibré en quadrature modifié (160)
- l'amplification d'une première partie (132a) du signal d'entrée de transmission (131) avec un premier trajet de signal de transmission (165, 170, 166a, 167) de l'amplificateur de puissance équilibré en quadrature modifié (160) et une seconde partie (132b) du signal d'entrée de transmission (131) avec un second trajet de signal de transmission (165, 166b, 167) de l'amplificateur de puissance équilibré en quadrature modifié (160), et
- la fourniture d'un signal de transmission (150) généré au niveau d'un port de sortie de signal de transmission (163) de l'amplificateur de puissance équilibré en quadrature modifié (160) à partir de la première partie amplifiée (133a) et de la seconde partie amplifiée (133b) à l'antenne (110), et/ou

la réception du signal de réception (150) comprend la fourniture d'un signal (151) reçu de l'antenne (110) au port de sortie de signal de transmission (163) de l'amplificateur de puissance équilibré en quadrature modifié (160) pour générer le signal de réception (150) au niveau d'un port isolé de sortie (164) de l'amplificateur de puissance équilibré en quadrature modifié (160), et la fourniture du signal de réception (150) à une entrée de signal de réception (141) d'un trajet de réception (140),

dans lequel chacun desdits au moins premier trajet de signal de transmission (165, 170, 166a, 167) et second trajet de signal de transmission (165, 166b, 167) comprend au moins un amplificateur de puissance (166a, 166b) configuré pour amplifier l'une des première partie (132a) et seconde partie (132b) du signal d'entrée de transmission (131), dans lequel des facteurs d'amplification des amplificateurs de puissance (166a, 166b) ont une amplitude et une phase ;

**caractérisé en ce que** les amplificateurs de puissance (166a, 166b) sont configurés ou configurables de telle sorte que l'amplitude et/ou la phase de leurs facteurs d'amplification diffèrent l'une de l'autre de telle manière qu'un signal de commande prédictive (134) est formé au niveau du port isolé de sortie (164) qui correspond à une partie du signal de transmission réfléchi par l'antenne (110) et transmis au port isolé de sortie (164) en amplitude, mais avec une phase opposée.

13. Procédé selon la revendication 12, dans lequel les amplificateurs de puissance (166a, 166b) sont des amplificateurs de puissance à coupure (166a, 166b).

**Fig. 1**

**Fig. 2**

200

**Fig. 3**

Prior Art

1100

**Fig. 4**

Prior Art

1200

Fig. 5

# DESCRIBED IN PCT/EP2017/081352

**Fig. 6**

# DESCRIBED IN PCT/EP2017/077407

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150222300 A1
- WO 2006071005 A1
- US 20090190509 A1
- EP 2017081352 W
- EP 2017077407 W

### Non-patent literature cited in the description

- Full Duplex Radios. **DINESH BHARADIA** ; **EMILY MCMILIN** ; **SACHIN KATTI**. Proceedings of the ACM SIGCOMM 2013 conference on SIGCOMM. Stanford University, 375-386